# EUROPEAN PATENT SPECIFICATION

(11) **EP 3 062 196 B1**
(45) Date of publication and mention of the grant of the patent: **07.02.2018**
(21) Application number: 15198188.3
(22) Date of filing: 07.12.2015
(51) Int. Cl.: G08C 17/02, G06F 3/0484, G06F 3/0481, G06F 3/01, H04L 12/28

(54) **METHOD AND APPARATUS FOR OPERATING AND CONTROLLING SMART DEVICES WITH HAND GESTURES**
VERFAHREN UND VORRICHTUNG ZUM BETÄTIGEN UND REGELN INTELLIGENTER VORRICHTUNGEN MITTELST HANDGEBÄRDEN
PROCÉDÉ ET APPAREIL PERMETTANT DE FAIRE FONCTIONNER ET COMMANDER DES DISPOSITIVES INTELLIGENTS AVEC GESTES DE LA MAIN

(30) Priority: 26.02.2015 CN 201510087958
(43) Date of publication of application: 31.08.2016
(73) Proprietor: Xiaomi Inc., Beijing 100085 (CN)
(72) Inventor: LIANG, Xin, 100085 Haidian District (CN); FAN, Li, 100085 Haidian District (CN)
(74) Representative: Sadler, Peter Frederick

(56) References cited:
- WO-A1-2011/159943
- WO-A1-2012/099584
- WO-A1-2014/169566
- US-A1- 2012 124 516
- US-A1- 2013 265 229
- US-A1- 2014 149 859
- singlecue: "singlecue - Your home. Smarter. Simpler. Fun.", YouTube, 24 November 2014 (2014-11-24), pages 1-1, XP054976505, Retrieved from the Internet: URL:https://www.youtube.com/watch?v=_1QnnR n47r0 [retrieved on 2016-04-28]
- The Wand Company: "The Kymera Wand", YouTube, 30 August 2011 (2011-08-30), pages 1-1, XP054976500, Retrieved from the Internet: URL:https://www.youtube.com/watch?v=_xl6_O ftBR4 [retrieved on 2016-04-25]

## Description

### TECHNICAL FIELD

The present disclosure relates to the field of terminal technologies, and more particularly to a method and apparatus for operating and controlling a smart device.

### BACKGROUND

With the rapid development of terminal technologies, more and more smart devices have appeared, for example, such smart mobile terminals as smart phones, smart wearable devices or the like, and such smart home devices as smart televisions, smart refrigerators or the like. A user normally owns a plurality of smart devices. Therefore, a method for operating and controlling smart devices is very important to simply and quickly operate and control various smart devices.

In the related art, a smart device is generally operated and controlled by means of contact-type operation and control. For example, a user operates and controls a smart device by touching a function key on the smart device, or by using a remote control of the smart device. For example, when a user operates and controls a smart television, the user generally operates the function keys on the smart television or uses a television remote control.

During implementation of the present disclosure, the inventors have identified that at least the following defects exist in the related art:

In the related art, operating and controlling the smart device relies on manual contact of a user. If a smart device or a remote control is not at hand for the user, operating and controlling the smart device cannot be achieved, which results in an inflexible operation and control of the smart device. In addition, when the remote control is used to operate and control the smart device, since one smart device corresponds to one remote control, when the user desires to operate and control another smart device, the remote control of the other device needs to be used, such that the operation and control of the smart device is complicated. For example, after operating and controlling a smart television by a remote control of the television, if the user desires to operate and control an air conditioner, the user needs to firstly find the remote control of the air conditioner, and then operates and controls the air conditioner by using the remote control thereof. As a result, the operation and control manner is very complicated.

International patent application WO 2012/099584 describes a multimodal gestural control system in which a gesture command is detected from a user via at least one device of a plurality of devices. A control operation and a destination device are both determined based on the gesture command. US patent application US 2013/0265229 describes methods for controlling electronic devices based on hand gestures detected based upon the topography of a portion of a user's body. Devices may be identified by the user pointing at them. US patent application US 2012/0124516 describes a system for electronic device control based on gestures. A command for an electronic device is determined based on a detected user gesture and a menu that includes selectable options. The command is then sent from the gesture controller to the electronic device. The user may access a set-up feature to select a particular gesture for a particular device.

### SUMMARY

To overcome the problem in the related art, the present disclosure relates to a device and computer-implemented method for operating and controlling one or more smart devices based on gestures, as defined by the independent claims 1 of 6 of the present application. Preferred embodiments of the invention are defined by the other appended claims.

The technical solutions provided in the embodiments of the present disclosure may achieve the following beneficial effects:

Switching of a control relationship is prepared according to a first gesture action and a first mapping relationship, a target controlled device is determined according to a second gesture action and a second mapping relationship, a control relationship with the target controlled device is established, a third gesture action is acquired, and the target controlled device is controlled to perform an operation corresponding to the third gesture action. In this way, the target controlled device is operated and controlled. The control relationship may be switched to the target controlled device only by means of gesture actions, and operation and control of the target controlled device may be implemented by means of gesture actions. Therefore, the operation and control manner is simpler, and in addition flexibility of the operation and control manner is also improved.

### BRIEF DESCRIPTION OF THE DRAWINGS

The accompanying drawings herein, which are incorporated into and constitute a part of the specification, illustrate embodiments consistent with the present disclosure, and together with the specification, serve to explain the principles of the present disclosure.
Fig. 1 is a schematic diagram illustrating an implementation environment of a method for operating and controlling a smart device according to an exemplary embodiment of the present disclosure;
Fig. 2 is a flowchart illustrating a method for operating and controlling a smart device according to an exemplary embodiment of the present disclosure;
Fig. 3 is a flowchart illustrating a method for operating and controlling a smart device according to an exemplary embodiment of the present disclosure;
Fig 4 is a schematic diagram illustrating a process of acquiring a positioning straight line according to an exemplary embodiment of the present disclosure;
Fig. 5 is a block diagram illustrating an apparatus for operating and controlling a smart device according to an exemplary embodiment of the present disclosure;
Fig. 6 is a block diagram illustrating an apparatus for operating and controlling a smart device according to an exemplary embodiment of the present disclosure;
Fig. 7 is a block diagram illustrating an apparatus for operating and controlling a smart device according to an exemplary embodiment of the present disclosure;
Fig. 8 is a block diagram illustrating an apparatus for operating and controlling a smart device according to an exemplary embodiment of the present disclosure; and
Fig 9 is a block diagram illustrating a terminal according to one exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

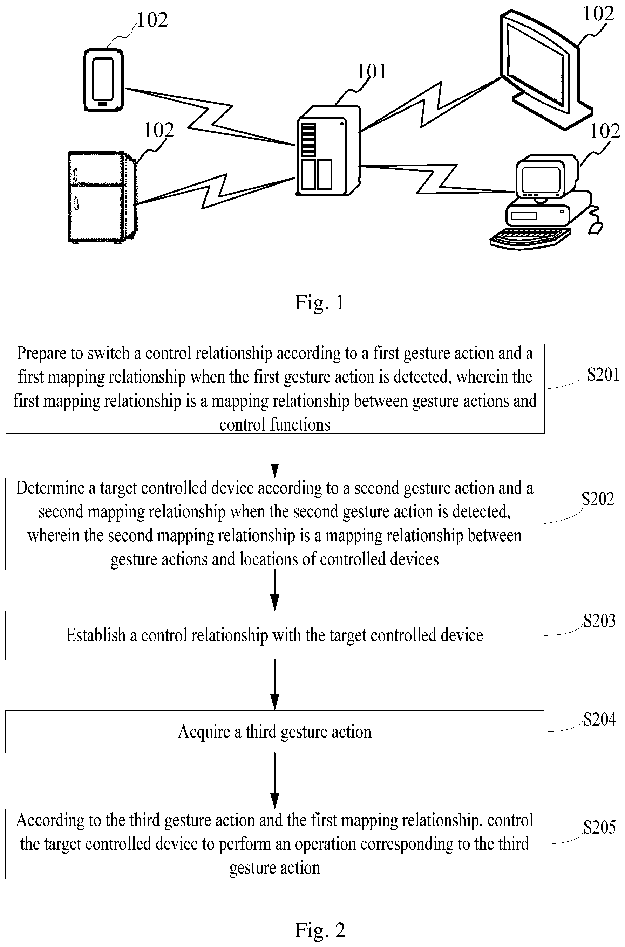

Fig. 1 is a schematic diagram illustrating an implementation environment of a method for operating and controlling a smart device according to an exemplary embodiment of the present disclosure. As illustrated in Fig. 1, the implementation environment includes a control device 101 and a plurality of controlled devices 102. The control device 101 and the controlled devices 102 are in the same local area network, and the control device 101 is respectively connected to the controlled devices 102 over a communication network, wherein the communication network may be the Internet or may be a Bluetooth network or the like. When the communication network is the Internet, the communication network may be a wired network or a wireless network.

The control device 101 may be configured to identify a gesture action made by a user, and control the controlled devices 102 to perform an operation corresponding to the gesture action upon determining a control function corresponding to the gesture action. The controlled devices 102 communicate with the control device 101, such that the control device 101 controls the controlled devices 102 to perform an operation corresponding to the gesture action of the user.

The control device 101 may be an independent device, or may be a function module configured in a controlled device 102, or may be a function module in a server in the local area network, which is not limited in the embodiments of the present disclosure. In addition, the control device 101 may include a camera for identifying the gesture action made by the user. The control device 101 may further include a data processing apparatus configured to convert an acquired gesture action into a corresponding control function or the like. The embodiments of the present disclosure set no limitation to the structure of the control device 101.

The controlled devices 102 may be various types of smart devices, which may be smart housing devices, such as smart televisions, smart refrigerators, smart air conditioners, smart radios, smart speaker systems, smart lamps or the like, or may be smart terminals, such as mobile phones, tablet computers, personal computers (PCs), desktop computers, laptop computers or the like. The embodiments of the present disclosure set no limitation to the type of the controlled device 102.

Generally, since a plurality of controlled devices 102 may be in the same local area network, when the controlled devices 102 are operated and controlled based on gesture identification, switching a control relationship of the control device 101 to a controlled device 102 and further operating and controlling the controlled device 102 are highly concerned in the industry. To solve this technical problem, embodiments of the present disclosure provide a method for operating and controlling a smart device. The specific method for operating and controlling a smart device is described in the following embodiments.

With reference to the schematic diagram illustrating the implementation environment as illustrated in Fig. 1 and the above content, Fig. 2 is a flowchart illustrating a method for operating and controlling a smart device according to an exemplary embodiment of the present disclosure. As illustrated in Fig. 2, the method for operating and controlling a smart device is applied in a terminal, and includes the following steps.

In step S201, switching of a control relationship is prepared according to a first gesture action and a first mapping relationship when the first gesture action is detected, the first mapping relationship being a mapping relationship between gesture actions and control functions.

In step S202, a target controlled device is determined according to a second gesture action and a second mapping relationship when the second gesture action is detected, the second mapping relationship being a mapping relationship between gesture actions and locations of controlled devices.

In step S203, a control relationship with the target controlled device is established.

In step S204, a third gesture action is acquired.

In step S205, according to the third gesture action and the first mapping relationship, the target controlled device is controlled to perform an operation corresponding to the third gesture action.

According to the method provided in the embodiment of the present invention, switching of a control relationship is prepared according to a first gesture action and a first mapping relationship, a target controlled device is determined according to a second gesture action and a second mapping relationship, a control relationship with the target controlled device is established, a third gesture action is acquired, and the target controlled device is controlled to perform an operation corresponding to the third gesture action. In this way, the target controlled device is operated and controlled. The control relationship may be switched to the target controlled device only by means of gesture actions, and operation and control of the target controlled device may be implemented by means of gesture actions. Therefore, the operation and control manner is simpler, and in addition flexibility of the operation and control manner is also improved.

In another embodiment, prior to the determining a target controlled device according to a second gesture action and a second mapping relationship when the second gesture action is detected, the method further includes:
acquiring a first positioning straight line and a second positioning straight line, the first positioning straight line and the second positioning straight line being extension lines to which a finger of a user points when the user respectively points to the controlled device in a first location and a second location;
determining a location of the controlled device according to an intersection point of the first positioning straight line and the second positioning straight line; and
establishing the second mapping relationship between gesture actions and locations of controlled devices.
In another embodiment, prior to the preparing to switch a control relationship according to a first gesture action and a first mapping relationship when the first gesture action is detected, the method further includes:
establishing a first mapping relationship between gesture actions and control functions, wherein the same gesture action is used to control the same control function of different controlled devices.

In another embodiment, the first gesture action and the second gesture action are performed by a user using two hands; and the preparing to switch a control relationship according to a first gesture action and a first mapping relationship includes:
preparing to switch the control relationship according to the first gesture action made by the user using one hand and the first mapping relationship; and
the determining a target controlled device according to a second gesture action and a second mapping relationship when the second gesture action is detected includes:
determining the target controlled device according to the second gesture action and the second mapping relationship when the first gesture action is detected and simultaneously the second gesture action made by the user using the other hand is detected.

In another embodiment, the first gesture action and the second gesture action are performed by a user using one hand; and the preparing to switch a control relationship according to a first gesture action and a first mapping relationship includes:
preparing to switch the control relationship according to the first gesture action made by the user using one hand and the first mapping relationship; and
the determining a target controlled device according to a second gesture action and a second mapping relationship when the second gesture action is detected includes:
determining the target controlled device according to the second gesture action and the second mapping relationship when a designated time duration elapses after the first gesture action made by the user using one hand is detected and then the second gesture action made by the user using the same hand or the other hand is detected.

In another embodiment, upon the controlling the target controlled device to perform an operation corresponding to the third gesture action, the method further includes:
releasing the control relationship with the target controlled device, and switching the control relationship back to the controlled device that is controlled before the first gesture action is detected.

The above optional technical solutions may be combined in any form to construct an optional embodiment of the present disclosure, which is not described herein any further

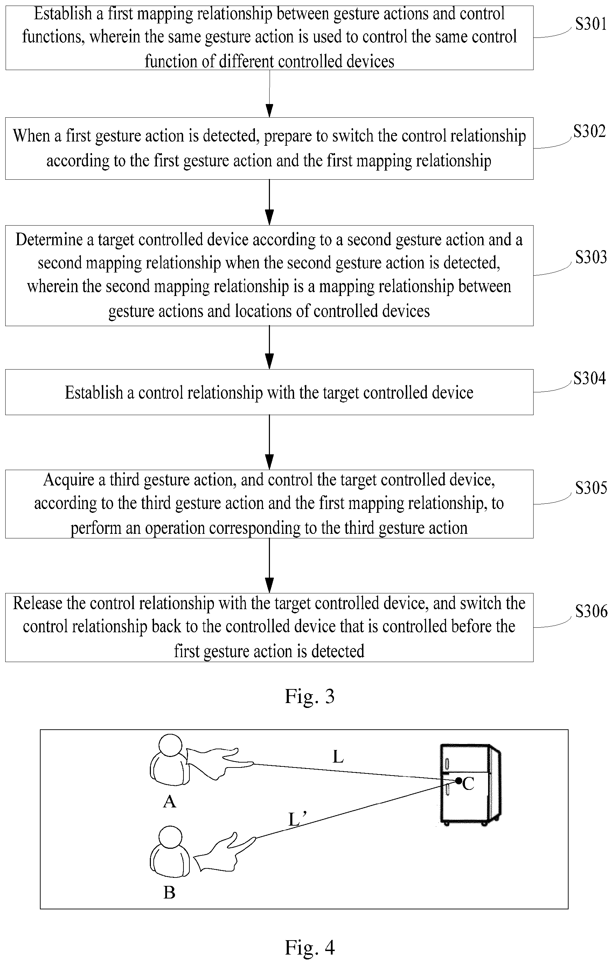

With reference to the content of the embodiment illustrated in Fig. 2, Fig. 3 is a flowchart illustrating a method for operating and controlling a smart device according to an exemplary embodiment of the present disclosure. As illustrated in Fig. 3, the method for operating and controlling a smart device is applied in a terminal, and includes the following steps.

In step S301, a first mapping relationship between gesture actions and control functions is established, wherein the same gesture action is used to control the same control function of different controlled devices.

When a control device detects a gesture action made by a user, to determine what kind of operation the user wants to control a controlled device to perform via the gesture action, a first mapping relationship between gesture actions and control functions needs to be firstly established when the control device desires to operate and control the controlled device via the gesture action. Based on this, after the gesture action of the user is subsequently acquired, the control device determines what kind of operation is to be performed by the controlled device by inquiring the first mapping relationship. Therefore, when the method for operating and controlling a smart device is performed, the first mapping relationship between gesture actions and control functions firstly needs to be established, and the first mapping relationship is stored.

The gesture action may be a dynamic state action, or a static state action. When the gesture action is a dynamic state action, for example, the user performs the action of drawing a circle, the control device may identify the gesture action according to a movement trajectory of the gesture. When the gesture action is a static state action, for example, if the user presents an "ok" shaped gesture action, the control device may identify the gesture action according to the gesture shape. The gesture action may be a combination of a dynamic state action and a static state action. For example, when the gesture action is that the user firstly presents an "ok" shaped gesture action, and then performs the action of drawing a circle, the control device identifies the gesture action according to both the gesture shape and the movement trajectory of the gesture action.

With reference to different states of the gesture action, the established first mapping relationship between gestures and control functions also varies. For example, when the control device identifies a gesture action according to a gesture movement trajectory, the first mapping relationship may be a mapping relationship between characteristic trajectories forming gesture actions and control functions; and when the control device identifies a gesture action according to a gesture shape, the first mapping relationship may be a mapping relationship between characteristic point sets forming gesture shapes and control functions.

For example, if the gesture action is a circle drawing action, and the control function corresponding to the gesture action is an enable operation; since the characteristic trajectory of the circle drawing action is a circular trajectory, the established first mapping relationship is a mapping relationship between the circular trajectory and the enable operation.

As a further example, if the gesture action is in an "ok" gesture shape, and the control function corresponding to the gesture action is a disable operation, a profile point set forming the "ok" gesture shape may be acquired, and the profile points in the set may be used as the characteristic point set of the "ok" gesture shape. In this case, the established first mapping relationship is a mapping relationship between the profile point set of the "ok" gesture shape and the disable operation.

The first mapping relationship between gesture actions and control functions may be established in the following manners:

First manner: during delivery of a control device from factory, a first mapping relationship between gesture actions and control functions is predefined.

In this manner, when a control device is delivered from the factory, a first mapping relationship is predefined; and subsequently the controlled devices are operated and controlled by using the control device according to the first mapping relationship predefined during delivery of the control device from factory. For example, if the enable operation has been set to correspond to the circle drawing action prior to delivery of the control device from factory, the control device operates and controls the controlled devices to implement the enable operation by means of the circle drawing action.

In addition, a plurality of controlled devices may generally be in the same local area network, and the controlled devices may generally have the same control function, for example, the enable function, confirm function, disable function or the like. To facilitate a user's operation and control of the same control function of different controlled devices, in the embodiment of the present disclosure, during defining of the first mapping relationship, the same gesture action may be set to operate and control the same, or similar, control function of the different controlled devices.

For example, with respect to a volume increase operation of a smart television, a volume increase operation of a smart radio, a temperature increase operation of a smart air conditioner or the like, such operations may be set to correspond to the same gesture action; with respect to a "confirm" operation of different controlled devices, such operation may also be set to correspond to the same gesture action; with respect to instruction operations such as operations in "up", "down", "left", "right" and the like directions, such operations may also be set to correspond to the same gesture action.

By setting the same function of different controlled devices to use the same gesture action, the user may operate and control the same function of different controlled devices by using the same gesture action. Relative to the scenario where the same control function of different controlled devices is operated and controlled by using different gesture actions in the related art, the operation and control manner according to the present disclosure is simple and time saving.

Second manner: after a control device is installed, a first mapping relationship between gesture actions and control functions is imported according to user's operations.

In this manner, when a control device is installed in a local area network, a first mapping relationship is defined according to operations of a user in the local area network. For example, after a control device is newly added to home A, the control device may firstly scan all the control functions of all the controlled devices in home A, and all the scanned control functions are displayed on a screen. Further, the control device may prompt in a screen display manner the user to import a gesture action corresponding to each of the control functions. After it is detected that the user selects a control function, a gesture action defined by the user with respect to the control function is imported, and a mapping relationship between the gesture action and the control function is stored. The above gesture action import operation is performed for each of the control functions. Hence, a first mapping relationship between all the control functions and the corresponding gesture actions thereof is established.

In addition, the user may be promoted to import a gesture action corresponding to each of the control functions in a voice manner. For example, after all the control functions are scanned, one control function is voice broadcast each time; and after it is confirmed that the user has imported the gesture action corresponding to the control function, a next control function is continuously voice broadcast, and the process proceeds with a gesture action corresponding to a next control function.

When the first mapping relationship is established in this manner, an imported gesture action may be applicable to a controlled device, or may be applicable to some of the controlled devices having the same control function. However, with respect to the case that different controlled devices have the same control function, in order to bring convenience for subsequently operating and controlling all the controlled devices in the local area network of the user, after all the control functions of all the controlled devices are searched, the control functions may be firstly classified, and a common control function of different controlled devices is acquired. Further, the control device may set the same gesture action to be used for operating and controlling the same control function of all the controlled devices in the local area network. For the content of the same gesture action for operating and controlling the same control function of different controlled devices, reference may be made to the description in the first manner, which is not described herein any further.

When the first mapping relationship is established in this manner, the user may customize the manner of establishing the first mapping relationship according to the actual needs, favorites and operation preferences, such that the manner for establishing the first mapping relationship is more flexible. For example, if the user is a left-hander, the user may customize the first mapping relationship by using the left hand.

Further, after the first mapping relationship is established in this manner, the user may modify the first mapping relationship between gesture actions and control functions according to the actual needs. For example, after establishing the first mapping relationship according to his tastes, the user may modify the gesture action if he or she feels that the present gesture action is effort-consuming when the first mapping relationship is established, or an identifying success rate of the control device is low.

For example, if the user sets the gesture action corresponding to a volume increase operation to point from the ear bottom to the top, and the user subsequently considers that the present gesture pointing from the ear bottom to the top is effort-consuming, then the user may modify the gesture action corresponding to the volume increase operation. For example, the gesture action is changed into sliding from the left to the right to form a straight line which is not less than a predetermined length.

It should be noted that this step is the basis for operating and controlling the controlled devices. After the first mapping relationship is pre-established, the controlled devices are subsequently operated and controlled by using the gesture action. That is, this step is a step prior to operating and controlling the controlled devices, and is not performed each time when the method for operating and controlling a smart device is performed. However, it should be ensured that the first mapping relationship is established before performing the method for operating and controlling a smart device.

In step S302, when a first gesture action is detected, switching of the control relationship is prepared according to the first gesture action and the first mapping relationship.

The control relationship is a basis for transferring control data and control instruction between the control device and the controlled devices. To operate and control a controlled device, the control device needs to establish a control relationship with the controlled devices, and transmit the control data and a control instruction based on the control relationship.

When the control device operates and controls a controlled device, if the control device is currently operating and controlling a controlled device, at this moment, after it is detected that a user desires to operate and control another controlled device, the control device needs to prepare to switch the control relationship. In this case, preparing to switch the control relationship may refer to a process of releasing the control relationship with the currently controlled device. If the control device is not operating and controlling any controlled device currently, preparing to switch the control relationship refers to a process for setting the current state to a state to switch.

With reference to the above content and the first mapping relationship between the gesture action and the control function pre-established in step S301, the control functions in the first mapping relationship include the function of preparing to switch the control relationship. In the embodiment of the present disclosure, the control functions of preparing to switch the control relationship of different controlled devices all correspond to the first gesture action. To be specific, after the control device detects the first gesture action, the control device may determine that the control function of preparing to switch the control relationship corresponds to the first gesture action by inquiring the first mapping relationship. In this case, the control relationship is prepared to switch according to the first gesture action and the first mapping relationship.

There are various types of first gesture actions. For example, the first gesture action may be the user's circle drawing action, or may be the user's action of presenting an action in a particular shape. For example, the user presents a circular action, a heart-shaped action, or the like. Based on this, according to the first gesture action and the first mapping relationship, preparing to switch the control relationship may be achieved according to the trajectory of the first gesture action, or achieved according to the shape of the first gesture action, which is not limited in the embodiment of the present disclosure.

It should be noted that the same gesture action is used to operate and control the same control function of different controlled devices in the embodiment of the present disclosure. Therefore, the switching of the control relationship between different controlled devices may be achieved according to the first gesture action. For example, if the gesture action is a circle drawing action and the user is currently operating and controlling a smart television, after the user presents the circle drawing action, the switching of the control relationship of the smart television is prepared; if the user is currently operating and controlling a smart air conditioner, after the user presents the same circle drawing action, the switching of the control relationship of the smart air conditioner is prepared.

The function of preparing for switching of different controlled devices is set as the first gesture action, which ensures that when the first gesture action is acquired, the operation of preparing to switch the control relationship is performed, and prevents the defect in the related art that the operation is complicated when different controlled devices are operated and controlled by using different gesture actions.

In step S303, a target controlled device is determined according to a second gesture action and a second mapping relationship when the second gesture action is detected, the second mapping relationship being a mapping relationship between gesture actions and locations of controlled devices;

The target controlled device is a controlled device that the user currently desires to operate and control. When a smart device is operated and controlled by using a gesture action, to determine a target controlled device, a trigger operation needs to be performed by a user using a gesture action. In the embodiment of the present disclosure, the control device triggers the determined target controlled device by using the second gesture action made by the user. Therefore, after the control device prepares to switch the control relationship, when the second gesture action is detected, the target controlled device is determined according to the second gesture action and the second mapping relationship between gesture actions and locations of controlled devices.

The target controlled device is generally determined by positioning according to the second gesture action. Therefore, when the control device detects the second gesture action, before determining the target controlled device according to the second gesture action and the second mapping relationship, the control device shall establish the second mapping relationship between gesture actions and positions of controlled device. The control device establishes the second mapping relationship by using steps including but not limited to the following step S3031 to step S3033.

In step S3031, a first positioning straight line and a second positioning straight line are acquired, wherein the first positioning straight line and the second positioning straight line are extension lines to which a finger of the user points when the user respectively points to the controlled device in a first location and a second location.

It should be noted that the control device is capable of determining the position of a user relative to the controlled device according to a relative distance between the user and the controlled device. When determining the location of a controlled device, the control device may firstly prompt the user, in a manner of screen display or voice, to point to the same controlled device at two different locations. When detecting that the user points to the controlled device at the first location according to the prompt, the control device acquires the first location of the user and the direction to which a finger of the user points when the user points to the controlled device, and thus acquires an extension line to which the finger of the user points at the first location as the first positioning straight line. When detecting that the user points to the controlled device at the second location according to the prompt, the control device acquires the second location of the user and the direction to which the finger of the finger points when the user points to the controlled device, and thus acquires an extension line to which the finger of the user points at the second location as the second positioning straight line.

As illustrated in Fig. 4, a schematic diagram when a positioning straight line is acquired is given. In Fig. 4, points A and B are respectively the first location and the second location of the user. When the user points to a controlled device at points A and B respectively, first positioning straight line L and second positioning straight line L' may be determined according to the extension line to which the finger of the user points. Further, an intersection point C of straight lines L and L' is the location of the controlled device.

In step S3032, a location of the controlled device is determined according to an intersection point of the first positioning straight line and the second positioning straight line.

During the determination of the location of the controlled device, spatial coordinates of the intersection point of the first positioning straight line and the second positioning straight line may be firstly determined, and then the spatial coordinates are used as the location of the controlled device.

Through step S3031 and step S3032, the location of each controlled device in the local area network may be determined. In addition, when a controlled device is newly added to the local area network, the location of the newly added controlled device may be determined in the manner provided in step S3031 and step S3032. A newly added controlled device may be detected by using the automatic identification protocol of the controlled device, which is not limited in the embodiment of the present disclosure.

In step S3033, the second mapping relationship between gesture actions and locations of controlled devices is established.

In a scenario where a plurality of controlled devices are included in the local area network, the location of each of the controlled devices may be determined through step S3031 and step S3032. Further, during the process of operating and controlling the controlled device by means of gesture identification, when the user sends a gesture action, to quickly determine the target controlled device that is to be operated and controlled by the gesture action, the second mapping relationship between gesture actions and locations of controlled device needs to be established. Based on this, after the second gesture action is acquired, the target controlled device may be quickly determined.

In addition, since the location of a controlled device may be determined according to the direction to which the gesture points, the gesture actions used for establishing the second mapping relationship include but not limited to a gesture action pointing to a direction. However, the gesture action used for establishing the second mapping relationship may be other gesture actions as long as a mapping relationship is established between the second gesture action and the position of the controlled device.

Through step S302 and step S303, the preparing to switch the control relationship according to the first gesture action and the first mapping relationship is implemented, and the target controlled device is determined according to the second gesture action and the second mapping relationship. With reference to the above content, the process that the control device prepares to switch the control relationship and determines the target controlled device needs to be implemented by the user according to the first gesture action and the second gesture action. The user may implement the first gesture action and the second gesture action using two hands or using one hand. In this case, the control device may prepare to switch the control relationship and determine the target controlled device in such manners including but not limited to the following:

First manner: the first gesture action and the second gesture action are implemented by the user using two hands. In this case, the control device prepares to switch the control relationship according to the first gesture action made by the user using one hand and the first mapping relationship; when the control device detects the first gesture action and meanwhile detects the second gesture action made by the user using the other hand, the control device determines the target controlled device according to the second gesture action and the second mapping relationship. That is, the control device may prepare to switch the control relationship while determining the target controlled device.

For example, if the first gesture action is a circle drawing action and the second gesture action is a finger pointing action, after the control device detects the user presents the circle drawing action and the finger pointing action using two hands respectively, the control device simultaneously perform the operations of preparing to switch the control relationship and determining the target controlled device.

When the preparing to switch the control relationship and the determining the target controlled device are implemented in this manner, the control device is capable of simultaneously detecting the first gesture action and the second gesture action. Therefore, the operations are time saving.

Second manner: the first gesture action and the second gesture action are implemented by the user using one hand. In this case, the control device prepares to switch the control relationship according to the first gesture action made by the user using one hand and the first mapping relationship; when a designated time duration elapses after the control device detects the first gesture action, and the control device detects the second gesture action made by the user using the same hand or using the other hand, the control device determines the target controlled device according to the second gesture action and the second mapping relationship. That is, the control device may prepare to switch the control relationship before determining the target controlled device.

The specific value of the designated time duration is not limited in the embodiment of the present disclosure. For example, the time duration may be 1 second, 3 seconds, or the like.

For example, if the first gesture action is a circle drawing action and the second gesture action is a finger pointing action, upon detecting that the user presents a circle drawing action using one hand, the control device prepares to switch the control relationship. When a designated time duration elapses after the control device detects the circle drawing action presented by the user using one hand, and the control device further detects that the user makes a finger pointing action using this hand, then the control device determines the target controlled device.

When the preparing to switch the control relationship and the determining the target controlled device are implemented in this manner, the control device needs to sequentially detect the first gesture action and the second gesture action. Therefore, the operations are time consuming as compared with the first manner. However, in this manner, the user may perform all the operations using one hand. Therefore, the operations are simple.

In step S304, a control relationship with the target controlled device is established.

To operate and control the target controlled device, the control device needs to switch the control relationship to the target controlled device. Therefore, the control relationship with the target controlled device needs to be established. After the control relationship with the target controlled device is established, when a gesture action made by the user is subsequently detected, a step is triggered to send a control instruction corresponding to the gesture action to the target controlled device, such that the target controlled device is controlled to perform a corresponding operation.

During establishment of the control relationship with the target controlled device, if the control device is just started, that is, the control device is not operating and controlling any controlled device, the control device may directly establish the control relationship with the target controlled device; if the control device is currently operating and controlling a controlled device, the control device may switch the control relationship from the current controlled device to the target controlled device.

In step S305, a third gesture action is acquired, and the target controlled device is controlled, according to the third gesture action and the first mapping relationship, to perform an operation corresponding to the third gesture action.

For example, after the control relationship with the target controlled device is established, if the third gesture action is subsequently acquired, the control device may firstly inquire the first mapping relationship according to the third gesture action and acquires a control function corresponding to the third gesture action, and further determine, according to the control function, what operation to control the controlled device to perform, thereby controlling the controlled device to perform the operation corresponding to the third gesture action.

When the control device controls, according to the third gesture action and the first mapping relationship, the target controlled device to perform the operation corresponding to the third gesture action, this may be achieved according to a trajectory of the third gesture action or according to a shape of the third gesture action, which is not limited in the embodiment of the present disclosure.

Further, the control device may control the target controlled device to perform the operation corresponding to the third gesture action by sending a control instruction to the target controlled device, wherein the control instruction includes operation content. Upon receiving the control instruction, the target controlled device performs the operation corresponding to the operation content.

For example, if the target controlled device is a smart television, the operation corresponding to the third gesture action is a volume increase operation; upon acquiring the third gesture action, the control device may send an operation notification message to the target controlled device, wherein the operation notification message includes operation content of increasing the volume. Upon receiving the operation notification message, the smart television performs the operation of increasing the volume.

In step S306, the control relationship with the target controlled device is released, and the control relationship is switched back to the controlled device that is controlled before the first gesture action is detected.

This step is an optional step. If in step S304, during establishment of the control relationship between the control device and the target controlled device, the control device switches the control relationship from the current controlled device to the target controlled device, the control device may, upon controlling the target controlled device to perform the operation corresponding to the third gesture action, release the control relationship with the target controlled device, and switch the control relationship back to the controlled device that is controlled by the control device before detecting the first gesture action.

Through this optional step, in the method provided in the embodiment of the present invention, the control device, when operating and controlling the target controlled device, only temporarily switches the control relationship to the target controlled device, and after operating and controlling the target controlled device, switches the control relationship back to the controlled device previously controlled by the control device.

For example, if the user is currently watching a television program but feels hot in the room, and desires to lower the temperature of the smart air conditioner, the control device may switch the control relationship from the smart television to the smart air conditioner through step S302 to step S304, and switch the control relationship back to the smart television upon operating and controlling the smart air conditioner in the manner described in step S305. If subsequently acquiring a gesture action, the control device continues operating and controlling the smart television according to the gesture action and the first mapping relationship.

According to the method provided in the embodiment of the present invention, switching of a control relationship is prepared according to a first gesture action and a first mapping relationship, a target controlled device is determined according to a second gesture action and a second mapping relationship, a control relationship with the target controlled device is established, a third gesture action is acquired, and the target controlled device is controlled to perform an operation corresponding to the third gesture action. In this way, the target controlled device is operated and controlled. The control relationship may be switched to the target controlled device only by means of gesture actions, and operation and control of the target controlled device may be implemented by means of gesture actions. Therefore, the operation and control manner is simpler, and in addition flexibility of the operation and control manner is also improved.

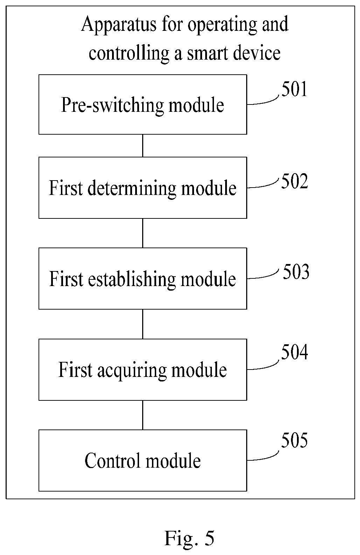

Fig. 5 is a block diagram illustrating an apparatus for operating and controlling a smart device according to an exemplary embodiment of the present disclosure. The apparatus for operating and controlling a smart device is applied in the method for operating and controlling a smart device according to the embodiment illustrated in Fig. 2 or Fig. 3. Referring to Fig. 5, the apparatus for operating and controlling a smart device includes: a pre-switching module 501, a first determining module 502, a first establishing module 503, a first acquiring module 504, and a control module 505.

The pre-switching module 501 is configured to prepare to switch a control relationship according to a first gesture action and a first mapping relationship when the first gesture action is detected, wherein the first mapping relationship is a mapping relationship between gesture actions and control functions.

The first determining module 502 is configured to determine a target controlled device according to a second gesture action and a second mapping relationship when the second gesture action is detected, wherein the second mapping relationship is a mapping relationship between gesture actions and locations of controlled devices.

The first establishing module 503 is configured to establish a control relationship with the target controlled device.

The first acquiring module 504 is configured to acquire a third gesture action.

The control module 505 is configured to, according to the third gesture action and the first mapping relationship, control the target controlled device to perform an operation corresponding to the third gesture action.

According to the apparatus provided in the embodiment of the present invention, switching of a control relationship is prepared according to a first gesture action and a first mapping relationship, a target controlled device is determined according to a second gesture action and a second mapping relationship, a control relationship with the target controlled device is established, a third gesture action is acquired, and the target controlled device is controlled to perform an operation corresponding to the third gesture action. In this way, the target controlled device is operated and controlled. The control relationship may be switched to the target controlled device only by means of gesture actions, and operation and control of the target controlled device may be implemented by means of gesture actions. Therefore, the operation and control manner is simpler, and in addition flexibility of the operation and control manner is also improved.

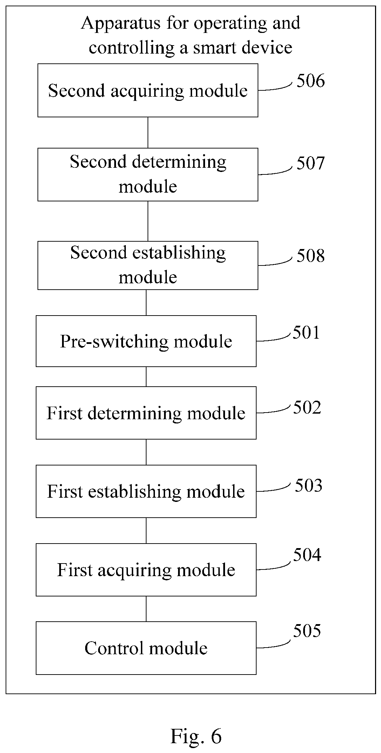

In another embodiment, as illustrated in Fig. 6, the apparatus for operating and controlling a smart device further includes: a second acquiring module 506, a second determining module 507, and a second establishing module 508.

The second acquiring module 506 is configured to acquire a first positioning straight line and a second positioning straight line, wherein the first positioning straight line and the second positioning straight line are extension lines to which a finger of a user points when the user respectively points to the controlled device in a first location and a second location.

The second determining module 507 is configured to determine a location of the controlled device according to an intersection point of the first positioning straight line and the second positioning straight line.

The second establishing module 508 is configured to establish the second mapping relationship between gesture actions and locations of controlled devices.

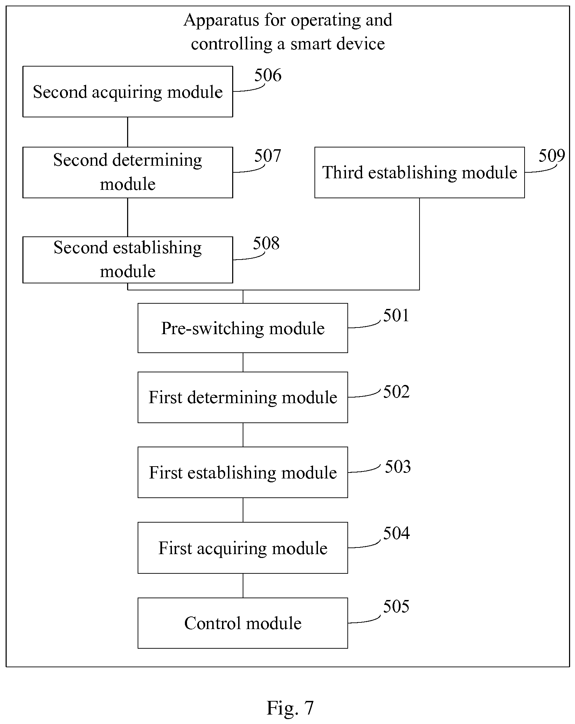

In another embodiment, referring to Fig. 7, the apparatus for operating and controlling a smart device further includes a third acquiring module 509; and
the third establishing module 509 is configured to establish a first mapping relationship between gesture actions and control functions, wherein the same gesture action is used to control the same control function of different controlled devices.

In another embodiment, the pre-switching module 501 is configured to prepare to switch the control relationship according to the first gesture action made by the user using one hand and the first mapping relationship; and
the first determining module 502 is configured to determine the target controlled device according to the second gesture action and the second mapping relationship when the first gesture action is detected and simultaneously the second gesture action made by the user using the other hand is detected.

In another embodiment, the pre-switching module 501 is configured to prepare to switch the control relationship according to the first gesture action made by the user using one hand and the first mapping relationship; and
the first determining module 502 is configured to determine the target controlled device according to the second gesture action and the second mapping relationship when a designated time duration elapses after the first gesture action made by the user using one hand is detected and then the second gesture action made by the user using the same hand or the other hand is detected.

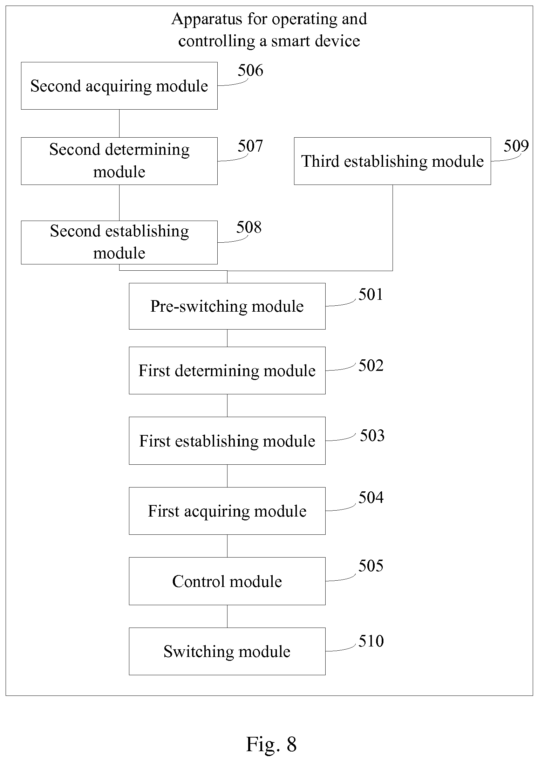

In another embodiment, referring to Fig. 8, the apparatus for operating and controlling a smart device further includes a switching module 510.

The switching module 510 is configured to release the control relationship with the target controlled device, and switch the control relationship back to the controlled device that is controlled before the first gesture action is detected.

The above optional technical solutions may be combined in any form to construct an optional embodiment of the present disclosure, which is not described herein any further.

With respect to the apparatuses in the above embodiments, the specific implementations of operations executed by various modules thereof have been described in detail in the embodiments illustrating the methods, which are not described herein any further.

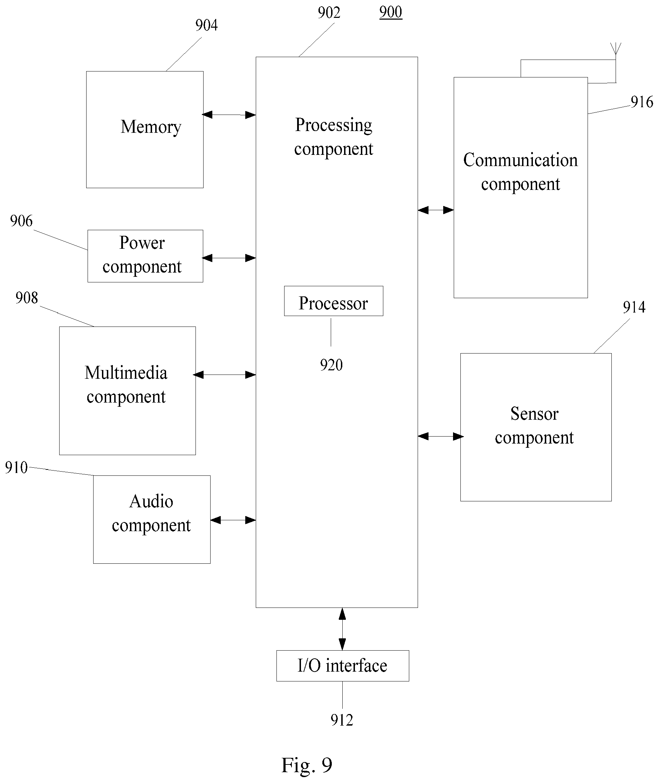

Fig. 9 is a block diagram illustrating a terminal 900 according to an exemplary embodiment of the present disclosure. The terminal may be employed to perform the above method for operating and controlling a smart device according to the embodiment illustrated in Fig. 2 or Fig. 3. For example, the terminal 900 may be a mobile phone, a computer, a digital broadcast terminal, a messaging device, a gaming console, a tablet, a medical device, exercise equipment, a personal digital assistant, and the like.

Referring to Fig 9, the terminal 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the terminal 900, such as the operations associated with display, telephone calls, data communications, camera operations, and recording operations. The processing component 902 may include one or more processors 920 to execute instructions to perform all or a part of the steps in the above-described methods. In addition, the processing component 902 may include one or more modules which facilitate the interaction between the processing component 902 and other components. For example, the processing component 902 may include a multimedia module to facilitate the interaction between the multimedia component 908 and the processing component 902.

The memory 904 is configured to store various types of data to support the operations of the terminal 900. Examples of such data include instructions for any application or method operated on the terminal 900, contact data, phonebook data, messages, pictures, videos, and the like. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the terminal 900. The power component 906 may include a power management system, one or more power supplies, and other components associated with the generation, management, and distribution of power in the terminal 900.

The multimedia component 908 includes a screen providing an output interface between the terminal 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and/or the rear camera may receive external multimedia data while the terminal 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone (MIC) configured to receive an external audio signal when the apparatus 900 is in an operation mode, such as a call mode, a recording mode, or a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and a peripheral interface module, such as a keyboard, a click wheel, a button, or the like. The buttons may include, but are not limited to, a home button, a volume button, a starting button, and a locking button.

The sensor component 914 includes one or more sensors to provide status assessments of various aspects of the terminal 900. For example, the sensor component 914 may detect an open/closed status of the terminal 900, relative positioning of components, e.g., the display and the keypad, of the terminal 900, a change in position of the terminal 914 or a component of the terminal 900, a presence or absence of user contact with the terminal 900, an orientation or an acceleration/deceleration of the terminal 900, and a change in temperature of the terminal 900. The sensor component 914 may include a proximity sensor configured to detect the presence of nearby objects without any physical contact. The sensor component 914 may further include a light sensor, for example, a complementary metal oxide semiconductor (CMOS) or a charge-coupled device (CCD) image sensor, which is applied in image application. In some embodiments, the sensor component 914 may also include an accelerometer sensor, a gyroscope sensor, a magnetic sensor, a pressure sensor, or a temperature sensor.

The communication component 916 is configured to facilitate communications, wired or wirelessly, between the terminal 900 and other devices. The terminal 900 may access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the terminal 900 may be implemented by one or a plurality of application specific integrated circuits (ASICs), digital signal processors (DSP), programmable logic devices (PLDs), field programmable gate arrays (FPGAs), controllers, microcontrollers, microprocessors or other electronic devices, for performing the method for operating and controlling a smart device according to the embodiment illustrated in Fig. 2 or Fig. 3.

In an exemplary embodiment, there is also provided a non-transitory computer-readable storage medium including instructions, such as the memory 904 including instructions, executable by the processor 920 in the terminal 900, for performing the method for operating and controlling a smart device according to the embodiment illustrated in Fig. 2 or Fig. 3. For example, the non-transitory computer-readable storage medium may be a ROM, a random access memory (RAM), a compact disc read-only memory (CD-ROM), a magnetic tape, a floppy disc, an optical data storage device, or the like.

A non-transitory computer-readable storage medium is provided. When instructions stored in the storage medium are executed by a processor of a terminal, the terminal is caused to perform a method for operating and controlling a smart device, wherein the method includes:
preparing to switch a control relationship according to a first gesture action and a first mapping relationship when the first gesture action is detected, wherein the first mapping relationship is a mapping relationship between gesture actions and control functions;
determining a target controlled device according to a second gesture action and a second mapping relationship when the second gesture action is detected, wherein the second mapping relationship is a mapping relationship between gesture actions and locations of controlled devices;
establishing a control relationship with the target controlled device;
acquiring a third gesture action; and
according to the third gesture action and the first mapping relationship, controlling the target controlled device to perform an operation corresponding to the third gesture action.

Assume that described above is a first possible implementation manner, in a second possible implementation manner based on the first possible implementation manner, the memory of the terminal further includes instructions for performing the following operations prior to the determining a target controlled device according to a second gesture action and a second mapping relationship when the second gesture action is detected:
acquiring a first positioning straight line and a second positioning straight line, wherein the first positioning straight line and the second positioning straight line are extension lines to which a finger of a user points when the user respectively points to the controlled device in a first location and a second location;
determining a location of the controlled device according to an intersection point of the first positioning straight line and the second positioning straight line; and
establishing the second mapping relationship between gesture actions and locations of controlled devices.

In a third possible implementation manner based on the first possible implementation manner, the memory of the terminal further includes instructions for performing the following operation prior to the preparing to switch a control relationship according to a first gesture action and a first mapping relationship when the first gesture action is detected:
establishing a first mapping relationship between gesture actions and control functions, wherein the same gesture action is used to control the same control function of different controlled devices.

In a fourth possible implementation manner based on the first possible implementation manner, the first gesture action and the second gesture action are performed by a user using two hands, and the memory of the terminal further includes instructions for performing the following operations included in the step of preparing to switch a control relationship according to a first gesture action and a first mapping relationship:
preparing to switch the control relationship according to the first gesture action made by the user using one hand and the first mapping relationship; and
the determining a target controlled device according to a second gesture action and a second mapping relationship when the second gesture action is detected includes:
   determining the target controlled device according to the second gesture action and the second mapping relationship when the first gesture action is detected and simultaneously the second gesture action made by the user using the other hand is detected.

In a fifth possible implementation manner based on the first possible implementation manner, the first gesture action and the second gesture action are performed by a user using one hand, and the memory of the terminal further includes instructions for performing the following operations included in the step of preparing to switch a control relationship according to a first gesture action and a first mapping relationship:
preparing to switch the control relationship according to the first gesture action made by the user using one hand and the first mapping relationship; and
the determining a target controlled device according to a second gesture action and a second mapping relationship when the second gesture action is detected includes:
   determining the target controlled device according to the second gesture action and the second mapping relationship when a designated time duration elapses after the first gesture action made by the user using one hand is detected and then the second gesture action made by the user using the same hand or the other hand is detected.

In a sixth possible implementation manner based on the first possible implementation manner, the memory of the terminal further includes instructions for performing the following operation upon the controlling the target controlled device to perform an operation corresponding to the third gesture action:
releasing the control relationship with the target controlled device, and switching the control relationship back to the controlled device that is controlled before the first gesture action is detected.

According to the non-transitory computer-readable storage medium provided in the embodiment of the present invention, switching of a control relationship is prepared according to a first gesture action and a first mapping relationship, a target controlled device is determined according to a second gesture action and a second mapping relationship, a control relationship with the target controlled device is established, a third gesture action is acquired, and the target controlled device is controlled to perform an operation corresponding to the third gesture action. In this way, the target controlled device is operated and controlled. The control relationship may be switched to the target controlled device only by means of gesture actions, and operation and control of the target controlled device may be implemented by means of gesture actions. Therefore, the operation and control manner is simpler, and in addition flexibility of the operation and control manner is also improved.

Other embodiments of the present disclosure will be apparent to those skilled in the art from consideration of the specification and practice disclosed herein. This application is intended to cover any variations, uses, or adaptations of the present disclosure following the general principles thereof and including such departures from the present disclosure as coming within common knowledge or customary technical means in the art. It is intended that the specification and examples be considered as exemplary only, with a true scope of the present disclosure being indicated by the appended claims.

It will be appreciated that the present disclosure is not limited to the exact construction that has been described above and illustrated in the accompanying drawings, and that various modifications and changes can be made without departing from the scope thereof. The scope of the present disclosure is only defined by the appended claims.

## Claims

1. A method of operating and controlling one or more smart devices, wherein the method comprises, at a control device (101):
preparing (S201, S302) to switch a control relationship according to a first user gesture action and a first mapping relationship when the first user gesture action is detected, the first mapping relationship being a mapping relationship between first user gesture actions and control functions, wherein preparing to switch a control relationship comprises releasing a control relationship with a currently controlled device, if any, and preparing to set a control relationship with a target smart device;
determining (S202, S303) the target smart device to be controlled, according to a second user gesture action and a second mapping relationship when the second user gesture action is detected, the second mapping relationship being a mapping relationship between second user gesture actions and locations of controllable smart devices;
establishing (S203, S304) a control relationship with the target smart device;
acquiring (S204) a third user gesture action; and
according to the third user gesture action and the first mapping relationship, controlling (S205, S305) the target smart device to perform a control function corresponding to the third user gesture action;
wherein prior to determining (S202, S303) the target smart device according to the second user gesture action and the second mapping relationship when the second user gesture action is detected, the method further comprises the establishment of the second mapping relationship by:
acquiring, for one or more smart devices, a first positioning straight line and a second positioning straight line, the first positioning straight line and the second positioning straight line being extension lines to which a finger of a user points when the user respectively points to the smart device from a first location and from a second location;
determining, for each of the smart devices, a location of the smart device according to an intersection point of the first positioning straight line and the second positioning straight line; and
establishing the second mapping relationship between second user gesture actions and locations of the smart devices.

2. The method according to claim 1, wherein prior to the releasing a control relationship with a currently controlled device, if any, and preparing to set a control relationship with a target smart device (S201, S302) according to a first user gesture action and a first mapping relationship when the first user gesture action is detected, the method further comprises:
establishing (S301) a first mapping relationship between user gesture actions and control functions, wherein the same user gesture action is used to control the same control function of different smart devices.

3. The method according to any preceding claim, wherein the first user gesture action and the second user gesture action are performed by a user using two hands; and the preparing (S201, S302) to switch a control relationship according to a first user gesture action and a first mapping relationship comprises:
preparing to switch the control relationship according to the first user gesture action made by the user using one hand and the first mapping relationship; and
the determining (S202, S303) a target smart device to be controlled according to a second user gesture action and a second mapping relationship when the second user gesture action is detected comprises:
determining the target smart device according to the second user gesture action and the second mapping relationship when the first user gesture action is detected and simultaneously the second user gesture action made by the user using the other hand is detected.

4. The method according to any preceding claim, wherein the first user gesture action and the second user gesture action are one-hand gestures performed by a user; and the preparing (S201, S302) to switch a control relationship according to a first user gesture action and a first mapping relationship comprises:
preparing to switch the control relationship according to the first user gesture action made by the user using a first hand and the first mapping relationship; and
the determining (S202, S303) a target smart device to be controlled according to a second user gesture action and a second mapping relationship when the second user gesture action is detected comprises:
determining the target smart device according to the second user gesture action and the second mapping relationship when a designated time duration elapses after the first user gesture action made by the user using the first hand is detected and then the second user gesture action made by the user using the same hand or the other hand is detected.

5. The method according to claim 1, wherein upon controlling (S305) the target smart device to perform a control function corresponding to the third user gesture action, the method further comprises:
releasing (S306) the control relationship with the target smart device, and switching the control relationship back to the smart device that was controlled before the first user gesture action was detected.

6. An apparatus for operating and controlling one or more smart devices, wherein the apparatus comprises:
a pre-switching module (501), configured to prepare to switch a control relationship according to a first user gesture action and a first mapping relationship when the first user gesture action is detected, the first mapping relationship being a mapping relationship between first user gesture actions and control functions, wherein being configured to prepare to switch a control relationship comprises being configured to release a control relationship with a currently controlled device, if any, and being configured to prepare to set a control relationship with a target smart device;
a first determining module (502), configured to determine the target smart device to be controlled, according to a second user gesture action and a second mapping relationship when the second user gesture action is detected, the second mapping relationship being a mapping relationship between second user gesture actions and locations of controllable smart devices;
a first establishing module (503), configured to establish a control relationship with the target smart device;
a first acquiring module (504), configured to acquire a third user gesture action; and
a controlling module (505), configured to, according to the third user gesture action and the first mapping relationship, control the target smart device to perform a control function corresponding to the third user gesture action;
wherein the apparatus further comprises:
a second acquiring module (506), configured to acquire, for one or more smart devices, a first positioning straight line and a second positioning straight line, the first positioning straight line and the second positioning straight line being extension lines to which a finger of a user points when the user respectively points to the smart device from a first location and from a second location;
a second determining module (507), configured to determine, for each of the smart devices, a location of the smart device according to an intersection point of the first positioning straight line and the second positioning straight line; and
a second establishing module (508), configured to establish the second mapping relationship between second user gesture actions and locations of the smart devices.

7. The apparatus according to claim 6, wherein the apparatus further comprises:
a third establishing module (509), configured to establish a first mapping relationship between user gesture actions and control functions, wherein the same user gesture action is used to control the same control function of different smart devices.

8. The apparatus according to claim 6 or 7, wherein the pre-switching module (501) is configured to prepare to switch the control relationship according to the first user gesture action made by the user using one hand and the first mapping relationship; and
the first determining module (502) is configured to determine the target smart device according to the second user gesture action and the second mapping relationship when the first user gesture action is detected and simultaneously the second user gesture action made by the user using the other hand is detected.

9. The apparatus according to any of claims 6 to 8, wherein the pre-switching module (501) is configured to prepare to switch the control relationship according to the first user gesture action made by the user using one hand and the first mapping relationship; and
the first determining module (502) is configured to determine the target smart device according to the second user gesture action and the second mapping relationship when a designated time duration elapses after the first user gesture action made by the user using one hand is detected and then the second user gesture action made by the user using the same hand or the other hand is detected.

10. The apparatus according to any of claims 6 to 9, wherein the apparatus further comprises:
a switching module (510), configured to release the control relationship with the target smart device, and switch the control relationship back to the smart device that is controlled before the first user gesture action is detected.

11. A terminal, wherein the terminal comprises:
a processor (920); and
a memory (904) for storing instructions executable by the processor;
wherein the processor is configured to perform the method of any of claims 1 to 5.

12. A computer program which, when executed on the processor of the terminal of claim 11, performs a method according to any one of claims 1 to 5.

## Patentansprüche

1. Verfahren zum Bedienen und Steuern von einer oder mehr intelligenten Vorrichtungen, wobei das Verfahren an einer Steuervorrichtung (101) aufweist:
Vorbereiten (S201, S302) zum Umschalten einer Steuerbeziehung gemäß einer ersten Benutzergestenaktion und einer ersten Zuordnungsbeziehung, wenn die erste Benutzergestenaktion erkannt wird, wobei die erste Zuordnungsbeziehung eine Zuordnungsbeziehung zwischen ersten Benutzergestenaktionen und Steuerfunktionen ist, wobei das Vorbereiten zum Umschalten einer Steuerbeziehung das Freigeben einer Steuerbeziehung mit einer aktuell gesteuerten Vorrichtung, falls vorhanden, und Vorbereiten zum Einstellen einer Steuerbeziehung mit einer intelligenten Zielvorrichtung aufweist;
Bestimmen (S202, S303) der zu steuernden intelligenten Zielvorrichtung gemäß einer zweiten Benutzergestenaktion und einer zweiten Zuordnungsbeziehung, wenn die zweite Benutzergestenaktion erkannt wird, wobei die zweite Zuordnungsbeziehung eine Zuordnungsbeziehung zwischen zweiten Benutzergestenaktionen und Standorten steuerbarer intelligenter Vorrichtungen ist;
Aufbauen (S203, S304) einer Steuerbeziehung mit der intelligenten Zielvorrichtung;
Erfassen (S204) einer dritten Benutzergestenaktion und
Steuern (S205, S305) der intelligenten Zielvorrichtung gemäß der dritten Benutzergestenaktion und der ersten Zuordnungsbeziehung zum Durchführen einer der dritten Benutzergestenaktion entsprechenden Steuerfunktion;
wobei vor dem Bestimmen (S202, S303) der intelligenten Zielvorrichtung gemäß der zweiten Benutzergestenaktion und der zweiten Zuordnungsbeziehung, wenn die zweite Benutzergestenaktion erkannt wird, das Verfahren ferner den Aufbau der zweiten Zuordnungsbeziehung durch Folgendes aufweist:
für eine oder mehr intelligente Vorrichtungen Erfassen einer ersten Positionierungsgeraden und einer zweiten Positionierungsgeraden, wobei die erste Positionierungsgerade und die zweite Positionierungsgerade Verlängerungslinien sind, auf die ein Finger eines Benutzers zeigt, wenn der Benutzer von einem ersten Standort bzw. von einem zweiten Standort auf die intelligente Vorrichtung zeigt;
für jede der intelligenten Vorrichtungen Bestimmen eines Standorts der intelligenten Vorrichtung gemäß einem Schnittpunkt der ersten Positionierungsgeraden und der zweiten Positionierungsgeraden und
Aufbauen der zweiten Zuordnungsbeziehung zwischen zweiten Benutzergestenaktionen und Standorten der intelligenten Vorrichtungen.

2. Verfahren nach Anspruch 1, wobei vor dem Freigeben einer Steuerbeziehung mit einer aktuell gesteuerten Vorrichtung, falls vorhanden, und Vorbereiten zum Einstellen einer Steuerbeziehung mit einer intelligenten Zielvorrichtung (S201, S302) gemäß einer ersten Benutzergestenaktion und einer ersten Zuordnungsbeziehung, wenn die erste Benutzergestenaktion erkannt wird, das Verfahren ferner aufweist:
Aufbauen (S301) einer ersten Zuordnungsbeziehung zwischen Benutzergestenaktionen und Steuerfunktionen, wobei die gleiche Benutzergestenaktion zum Steuern der gleichen Steuerfunktion verschiedener intelligenter Vorrichtungen verwendet wird.

3. Verfahren nach einem der vorhergehenden Ansprüche, wobei die erste Benutzergestenaktion und die zweite Benutzergestenaktion von einem Benutzer mit beiden Händen durchgeführt werden und das Vorbereiten (S201, S302) zum Umschalten einer Steuerbeziehung gemäß einer ersten Benutzergestenaktion und einer ersten Zuordnungsbeziehung aufweist:
Vorbereiten zum Umschalten der Steuerbeziehung gemäß der ersten Benutzergestenaktion, die von dem Benutzer mit einer Hand gemacht wird, und der ersten Zuordnungsbeziehung; und
das Bestimmen (S202, S303) einer zu steuernden intelligenten Zielvorrichtung gemäß einer zweiten Benutzergestenaktion und einer zweiten Zuordnungsbeziehung, wenn die zweite Benutzergestenaktion erkannt wird, aufweist:
Bestimmen der intelligenten Zielvorrichtung gemäß der zweiten Benutzergestenaktion und der zweiten Zuordnungsbeziehung, wenn die erste Benutzergestenaktion erkannt wird und gleichzeitig die zweite Benutzergestenaktion, die von dem Benutzer mit der anderen Hand gemacht wird, erkannt wird.

4. Verfahren nach einem der vorhergehenden Ansprüche, wobei die erste Benutzergestenaktion und die zweite Benutzergestenaktion von einem Benutzer durchgeführte einhändige Gesten sind
und das Vorbereiten (S201, S302) zum Umschalten einer Steuerbeziehung gemäß einer ersten Benutzergestenaktion und einer ersten Zuordnungsbeziehung aufweist:
Vorbereiten zum Umschalten der Steuerbeziehung gemäß der ersten Benutzergestenaktion, die von dem Benutzer mit einer ersten Hand gemacht wird, und der ersten Zuordnungsbeziehung; und
das Bestimmen (S202, S303) einer zu steuernden intelligenten Zielvorrichtung gemäß einer zweiten Benutzergestenaktion und einer zweiten Zuordnungsbeziehung, wenn die zweite Benutzergestenaktion erkannt wird, aufweist:
Bestimmen der intelligenten Zielvorrichtung gemäß der zweiten Benutzergestenaktion und der zweiten Zuordnungsbeziehung, wenn eine festgelegte Zeitspanne verstreicht, nachdem die erste Benutzergestenaktion erkannt wird, die von dem Benutzer mit der ersten Hand gemacht wird, und dann die zweite Benutzergestenaktion erkannt wird, die von dem Benutzer mit derselben Hand oder der anderen Hand gemacht wird.

5. Verfahren nach Anspruch 1, wobei beim Steuern (S305) der intelligenten Zielvorrichtung zum Durchführen einer Steuerfunktion, die der dritten Benutzergestenaktion entspricht, das Verfahren ferner aufweist:
Freigeben (S306) der Steuerbeziehung mit der intelligenten Zielvorrichtung und Umschalten der Steuerbeziehung zurück auf die intelligente Vorrichtung, die gesteuert wurde, bevor die erste Benutzergestenaktion erkannt wurde.

6. Vorrichtung zum Bedienen und Steuern von einer oder mehr intelligenten Vorrichtungen, wobei die Vorrichtung aufweist:
Umschaltvorbereitungsmodul (501), das zum Vorbereiten zum Umschalten einer Steuerbeziehung gemäß einer ersten Benutzergestenaktion und einer ersten Zuordnungsbeziehung, wenn die erste Benutzergestenaktion erkannt wird, konfiguriert ist, wobei die erste Zuordnungsbeziehung eine Zuordnungsbeziehung zwischen ersten Benutzergestenaktionen und Steuerfunktionen ist, wobei das Konfiguriertsein zum Vorbereiten zum Umschalten einer Steuerbeziehung das Konfiguriertsein zum Freigeben einer Steuerbeziehung mit einer aktuell gesteuerten Vorrichtung, falls vorhanden, und das Konfiguriertsein zum Vorbereiten zum Einstellen einer Steuerbeziehung mit einer intelligenten Zielvorrichtung aufweist;
ein erstes Bestimmungsmodul (502), das zum Bestimmen der zu steuernden intelligenten Zielvorrichtung gemäß einer zweiten Benutzergestenaktion und einer zweiten Zuordnungsbeziehung, wenn die zweite Benutzergestenaktion erkannt wird, konfiguriert ist, wobei die zweite Zuordnungsbeziehung eine Zuordnungsbeziehung zwischen zweiten Benutzergestenaktionen und Standorten steuerbarer intelligenter Vorrichtungen ist;
ein erstes Aufbaumodul (503), das zum Aufbauen einer Steuerbeziehung mit der intelligenten Zielvorrichtung konfiguriert ist;
ein erstes Erfassungsmodul (504), das zum Erfassen einer dritten Benutzergestenaktion konfiguriert ist; und
ein Steuermodul (505), das zum Steuern der intelligenten Zielvorrichtung gemäß der dritten Benutzergestenaktion und der ersten Zuordnungsbeziehung zum Durchführen einer der dritten Benutzergestenaktion entsprechenden Steuerfunktion konfiguriert ist;
wobei die Vorrichtung ferner aufweist:
ein zweites Erfassungsmodul (506), das zum Erfassen einer ersten Positionierungsgeraden und einer zweiten Positionierungsgeraden für eine oder mehr intelligente Vorrichtungen konfiguriert ist, wobei die erste Positionierungsgerade und die zweite Positionierungsgerade Verlängerungslinien sind, auf die ein Finger eines Benutzers zeigt, wenn der Benutzer von einem ersten Standort bzw. von einem zweiten Standort auf die intelligente Vorrichtung zeigt;
ein zweites Bestimmungsmodul (507), das für jede der intelligenten Vorrichtungen zum Bestimmen eines Standorts der intelligenten Vorrichtung gemäß einem Schnittpunkt der ersten Positionierungsgeraden und der zweiten Positionierungsgeraden konfiguriert ist; und
ein zweites Aufbaumodul (508), das zum Aufbauen der zweiten Zuordnungsbeziehung zwischen zweiten Benutzergestenaktionen und Standorten der intelligenten Vorrichtungen konfiguriert ist.

7. Vorrichtung nach Anspruch 6, wobei die Vorrichtung ferner aufweist:
ein drittes Aufbaumodul (509), das zum Aufbauen einer ersten Zuordnungsbeziehung zwischen Benutzergestenaktionen und Steuerfunktionen konfiguriert ist, wobei die gleiche Benutzergestenaktion zum Steuern der gleichen Steuerfunktion verschiedener intelligenter Vorrichtungen verwendet wird.

8. Vorrichtung nach Anspruch 6 oder 7, wobei das Umschaltvorbereitungsmodul (501) zum Vorbereiten zum Umschalten der Steuerbeziehung gemäß der ersten Benutzergestenaktion, die von dem Benutzer mit einer Hand gemacht wird, und der ersten Zuordnungsbeziehung konfiguriert ist; und
das erste Bestimmungsmodul (502) zum Bestimmen der intelligenten Zielvorrichtung gemäß der zweiten Benutzergestenaktion und der zweiten Zuordnungsbeziehung, wenn die erste Benutzergestenaktion erkannt wird und gleichzeitig die zweite Benutzergestenaktion, die von dem Benutzer mit der anderen Hand gemacht wird, erkannt wird, konfiguriert ist.

9. Vorrichtung nach einem der Ansprüche 6 bis 8, wobei das Umschaltvorbereitungsmodul (501) zum Vorbereiten zum Umschalten der Steuerbeziehung gemäß der ersten Benutzergestenaktion, die von dem Benutzer mit einer Hand gemacht wird, und der ersten Zuordnungsbeziehung konfiguriert ist und
das erste Bestimmungsmodul (502) zum Bestimmen der intelligenten Zielvorrichtung gemäß der zweiten Benutzergestenaktion und der zweiten Zuordnungsbeziehung, wenn eine festgelegte Zeitspanne verstreicht, nachdem die erste Benutzergestenaktion erkannt wird, die von dem Benutzer mit der ersten Hand gemacht wird, und dann die zweite Benutzergestenaktion erkannt wird, die von dem Benutzer mit derselben Hand oder der anderen Hand gemacht wird, konfiguriert ist.

10. Vorrichtung nach einem der Ansprüche 6 bis 9 wobei die Vorrichtung ferner aufweist:
ein Umschaltmodul (510), das zum Freigeben der Steuerbeziehung mit der intelligenten Zielvorrichtung und Umschalten der Steuerbeziehung zurück auf die intelligente Vorrichtung, die gesteuert wurde, bevor die erste Benutzergestenaktion erkannt wurde, konfiguriert ist.

11. Endgerät, wobei das Endgerät aufweist:
einen Prozessor (920) und
einen Speicher (904) zum Speichern von durch den Prozessor ausführbaren Anweisungen;
wobei der Prozessor zum Durchführen des Verfahrens nach einem der Ansprüche 1 bis 5 konfiguriert ist.

12. Computerprogramm, das bei Ausführung auf dem Prozessor des Endgeräts nach Anspruch 11 ein Verfahren nach einem der Ansprüche 1 bis 5 durchführt.

## Revendications

1. Procédé d'exploitation et de commande d'un ou de plusieurs dispositifs intelligents, le procédé comprenant, au niveau d'un dispositif de commande (101) :
la préparation (S201, S302) de la commutation d'une relation de commande conformément à une première action gestuelle d'utilisateur et une première relation de mappage quand la première action gestuelle d'utilisateur est détectée, la première relation de mappage étant une relation de mappage entre des premières actions gestuelles d'utilisateur et des fonctions de commande, dans lequel la préparation de la communication d'une relation de commande comprend la rupture d'une relation de commande avec un dispositif présentement commandé, éventuel, et la préparation de l'établissement d'une relation de commande avec un dispositif intelligent cible ;
la détermination (S202, S303) du dispositif intelligent cible à commander, conformément à une deuxième action gestuelle d'utilisateur et une seconde relation de mappage quand la deuxième action gestuelle d'utilisateur est détectée, la seconde relation de mappage étant une relation de mappage entre des deuxièmes actions gestuelles d'utilisateur et des emplacements de dispositifs intelligents pouvant être commandés ;
l'établissement (S203, S304) d'une relation de commande avec le dispositif intelligent cible ;
l'acquisition (S204) d'une troisième action gestuelle d'utilisateur ; et
conformément à la troisième action gestuelle d'utilisateur et la première relation de mappage, la commande (S205, S305) du dispositif intelligent cible afin d'exécuter une fonction de commande correspondant à la troisième action gestuelle d'utilisateur ;
le procédé comprenant en outre, avant la détermination (S202, S303) du dispositif intelligent cible conformément à la deuxième action gestuelle d'utilisateur et la seconde relation de mappage quand la deuxième action gestuelle d'utilisateur est détectée, l'établissement de la seconde relation de mappage en
acquérant, pour un ou plusieurs dispositifs intelligents, une première droite de positionnement et une seconde droite de positionnement, la première droite de positionnement et la seconde droite de positionnement étant des lignes de prolongement vers lesquelles l'utilisateur pointe du doigt quand l'utilisateur pointe respectivement vers le dispositif intelligent depuis un premier emplacement et depuis un second emplacement ;
déterminant, pour chacun des dispositifs intelligents, un emplacement du dispositif intelligent conformément à un point d'intersection de la première droite de positionnement et de la seconde droite de positionnement ; et
établissant la seconde relation de mappage entre des deuxièmes actions gestuelles d'utilisateur et des emplacements des dispositifs intelligents.

2. Procédé selon la revendication 1, le procédé comprenant en outre, avant la rupture d'une relation de commande avec un dispositif présentement commandé, éventuel, et la préparation de l'établissement d'une relation de commande avec un dispositif intelligent cible (S201, S302) conformément à une première action gestuelle d'utilisateur et une première relation de mappage quand la première action gestuelle d'utilisateur est détectée : l'établissement (S301) d'une première relation de mappage entre des actions gestuelles d'utilisateur et des fonctions de commande, dans lequel la même action gestuelle d'utilisateur est utilisée pour commander la même fonction de commande de dispositifs intelligents différents.

3. Procédé selon l'une quelconque des revendications précédentes, dans lequel la première action gestuelle d'utilisateur et la deuxième action gestuelle d'utilisateur sont exécutées par un utilisateur des deux mains ; et la préparation (S201, S302) de la commutation d'une relation de commande conformément à une première action gestuelle d'utilisateur et une première relation de mappage comprend :
la préparation de la commutation de la relation de commande conformément à la première action gestuelle d'utilisateur exécutée par l'utilisateur d'une main et la première relation de mappage ; et
la détermination (S202, S303) d'un dispositif intelligent cible à commander conformément à une deuxième action gestuelle d'utilisateur et une seconde relation de mappage quand la deuxième action gestuelle d'utilisateur est détectée comprend :
la détermination du dispositif intelligent cible conformément à la deuxième action gestuelle d'utilisateur et la seconde relation de mappage quand la première action gestuelle d'utilisateur est détectée et simultanément la deuxième action gestuelle d'utilisateur exécutée par l'utilisateur de l'autre main est détectée.

4. Procédé selon l'une quelconque des revendications précédentes, dans lequel la première action gestuelle d'utilisateur et la deuxième action gestuelle d'utilisateur sont des gestes d'une seule main exécutés par un utilisateur ; et la préparation (S201, S302) de la commutation d'une relation de commande conformément à une première action gestuelle d'utilisateur et une première relation de mappage comprend :
la préparation de la commutation de la relation de commande conformément à la première action gestuelle d'utilisateur effectuée par l'utilisateur d'une première main et la première relation de mappage ; et
la détermination (S202, S303) d'un dispositif intelligent cible à commander conformément à une deuxième action gestuelle d'utilisateur et une seconde relation de mappage quand la deuxième action gestuelle d'utilisateur est détectée comprend :
la détermination du dispositif intelligent cible conformément à la deuxième action gestuelle d'utilisateur et la seconde relation de mappage quand une durée de temps désignée s'écoule après la détection de la première action gestuelle d'utilisateur exécutée par l'utilisateur de la première main puis la détection de la deuxième action gestuelle d'utilisateur exécutée par l'utilisateur de la même main ou de l'autre main.

5. Procédé selon la revendication 1, le procédé comprenant en outre, à la commande (S305) du dispositif intelligent cible afin d'exécuter une fonction de commande correspondant à la troisième action gestuelle d'utilisateur :
la rupture (S306) de la relation de commande avec le dispositif intelligent cible, et la commutation à nouveau de la relation de commande sur le dispositif intelligent qui était commandé à la détection de la première action gestuelle d'utilisateur.

6. Appareil d'exploitation et de commande d'un ou de plusieurs dispositifs intelligents, l'appareil comprenant :
un module de pré-commutation (501), configuré pour préparer la commutation d'une relation de commande conformément à une première action gestuelle d'utilisateur et une première relation de mappage quand la première action gestuelle d'utilisateur est détectée, la première relation de mappage étant une relation de mappage entre des premières actions gestuelles d'utilisateur et des fonctions de commande, dans lequel être configuré pour préparer la commutation d'une relation de commande comprend être configuré pour rompre une relation de commande avec un dispositif présentement commandé, éventuel, et être configuré pour préparer l'établissement d'une relation de commande avec un dispositif intelligent cible ;
un premier module de détermination (502), configuré pour déterminer le dispositif intelligent cible à commander, conformément à une deuxième action gestuelle d'utilisateur et une seconde relation de mappage quand la deuxième action gestuelle d'utilisateur est détectée, la seconde relation de mappage étant une relation de mappage entre des deuxièmes actions gestuelles d'utilisateur et des emplacements de dispositifs intelligents pouvant être commandés ;
un premier module d'établissement (503), configuré pour établir une relation de commande avec le dispositif intelligent cible ;
un premier module d'acquisition (504), configuré pour acquérir une troisième action gestuelle d'utilisateur ; et
un module de commande (505), configuré pour, conformément à la troisième action gestuelle d'utilisateur et la première relation de mappage, commander le dispositif intelligent cible afin d'exécuter une fonction de commande correspondant à la troisième action gestuelle d'utilisateur ;
l'appareil comprenant en outre :
un second module d'acquisition (506), configuré pour acquérir, pour un ou plusieurs dispositifs intelligents, une première droite de positionnement et une seconde droite de positionnement, la première droite de positionnement et la seconde droite de positionnement étant des lignes de prolongement vers lesquelles l'utilisateur pointe du doigt quand l'utilisateur pointe respectivement vers le dispositif intelligent depuis un premier emplacement et un second emplacement ;
un second module de détermination (507), configuré pour déterminer, pour chacun des dispositifs intelligents, un emplacement du dispositif intelligent conformément à un point d'intersection de la première droite de positionnement et de la seconde droite de positionnement ; et
un second module d'établissement (508), configuré pour établir la seconde relation de mappage entre des deuxièmes actions gestuelles d'utilisateur et des emplacements des dispositifs intelligents.

7. Appareil selon la revendication 6, l'appareil comprenant en outre :
un troisième module d'établissement (509), configuré pour établir une première relation de mappage entre des actions gestuelles d'utilisateur et des fonctions de commande, dans lequel la même action gestuelle d'utilisateur sert à commander la même fonction de commande de dispositifs intelligents différents.

8. Appareil selon la revendication 6 ou 7, dans lequel le module de pré-commutation (501) est configuré pour préparer la commutation de la relation de commande conformément à la première action gestuelle d'utilisateur exécutée par l'utilisateur d'une main et la première relation de mappage ; et
le premier module de détermination (502) est configuré pour déterminer le dispositif intelligent cible conformément à la deuxième action gestuelle d'utilisateur et la seconde relation de mappage quand la première action gestuelle d'utilisateur est détectée et simultanément la deuxième action gestuelle d'utilisateur exécutée par l'utilisateur de l'autre main est détectée.

9. Appareil selon l'une quelconque des revendications 6 à 8, dans lequel le module de pré-commutation (501) est configuré pour préparer la commutation de la relation de commande conformément à le première action gestuelle d'utilisateur exécutée par l'utilisateur d'une main et la première relation de mappage ; et
le premier module de détermination (502) est configuré pour déterminer le dispositif intelligent cible conformément à la deuxième action gestuelle d'utilisateur et la seconde relation de mappage quand une durée de temps désignée s'écoule après la détection de la première action gestuelle d'utilisateur exécutée par l'utilisateur d'une main puis la détection de la deuxième action gestuelle d'utilisateur exécutée par l'utilisateur de la même main ou de l'autre main.

10. Appareil selon l'une quelconque des revendications 6 à 9, l'appareil comprenant en outre : un module de commutation (510), configuré pour rompre la relation de commande avec le dispositif intelligent cible, et commuter de nouveau la relation de commande sur le dispositif intelligent qui était commandé à la détection de la première action gestuelle d'utilisateur.

11. Terminal, le terminal comprenant :
un processeur (920) ; et
une mémoire (904) destinée à mémoriser des instructions exécutables par le processeur ;
dans lequel le processeur est configuré pour exécuter le procédé selon l'une quelconque des revendications 1 à 6.

12. Programme informatique qui, à son exécution sur le processeur selon la revendication 11, exécute un procédé selon l'une quelconque des revendications 1 à 5.
